# EUROPEAN PATENT SPECIFICATION

(11) **EP 4 338 139 B1**
(45) Date of publication and mention of the grant of the patent: **20.11.2024**
(21) Application number: 22723805.2
(22) Date of filing: 10.05.2022
(51) Int. Cl.: G07F 13/00, G07F 13/10, G07F 11/62, A47J 31/44, G07F 11/44, A23G 9/28, F16K 7/04, F16K 7/06

(54) **CHOKE DEVICE AND AN ASSEMBLY TO SUPPLY A GRANULAR OR POWDER PRODUCT PROVIDED WITH THE CHOKE DEVICE, IN PARTICULAR FOR AN AUTOMATIC BEVERAGE VENDING MACHINE**
DROSSELVORRICHTUNG UND ANORDNUNG ZUR ZUFUHR EINES MIT DER DROSSELVORRICHTUNG VERSEHENEN KÖRNIGEN ODER PULVERFÖRMIGEN PRODUKTS, INSBESONDERE FÜR EINEN GETRÄNKEAUTOMATEN
DISPOSITIF D'ÉTRANGLEMENT ET ENSEMBLE POUR FOURNIR UN PRODUIT GRANULAIRE OU EN POUDRE POURVU DU DISPOSITIF D'ÉTRANGLEMENT, EN PARTICULIER POUR UN DISTRIBUTEUR AUTOMATIQUE DE BOISSONS

(30) Priority: 10.05.2021 IT 202100011915
(43) Date of publication of application: 20.03.2024
(73) Proprietor: Rheavendors Industries S.p.A., 22100 Como (IT)
(72) Inventor: BRUZZESE, Fabio, 22100 Como (IT); MAGGIONI, Claudio, 22100 Como (IT); RIVA, Roberto, 22100 Como (IT); PIATTI, Gianluca, 22100 Como (IT); MOLINATI, Carlo Moreno, 22100 Como (IT); BELTRAME, Claudio, 22100 Como (IT)
(74) Representative: Studio Torta S.p.A.
(86) International application number: PCT/IB2022/054314
(87) International publication number: WO 2022/238880

(56) References cited:
- EP-A1- 2 133 610
- EP-A2- 3 068 724
- WO-A1-2019/082116
- DE-A1- 19 745 513
- GB-A- 1 012 565
- GB-A- 874 775
- US-A- 3 598 288
- US-A1- 2017 119 199

## Description

### Cross-Reference to Related Applications

This patent application claims priority from Italian patent application no. 102021000011915 filed on May 10, 2021.

### Technical Field of the Invention

The present invention relates to a choke device and to a feed assembly for a granular or powder product provided with such a device.

In particular, the present invention finds advantageous but not exclusive application in the feeding of a granular or powder product in an automatic beverage vending machine, to which the following discussion will make explicit reference without thereby losing generality.

Here and hereinafter, the term "product" means any soluble or partially soluble or hygroscopic material or any mixture of materials having any particle size and organoleptic properties to be preserved and maintained during their feeding.

### State of the Art

As is well known, automatic beverage vending machines are normally connected to the water supply network and generally comprise tanks containing granular or powder products and feed assemblies for feeding the aforementioned products.

An example of such feed assemblies is the one associated with an espresso brewing assembly for feeding sugar or other sweetener product into the coffee cup.

Regardless of the material dispensed, most of the known feed assemblies comprise a conveying pipe, which has its own product discharge section ending above the beverage container.

Although they are universally used, many of the known feed assemblies of the type defined above suffer from the main drawback of being poorly efficient and reliable.

The foregoing is due to the fact that the known assemblies do not allow the dosage of the fed product to be kept constant over time, in some cases, and they are not able to maintain the chemical-physical and/or organoleptic characteristics of the fed products unchanged, on the other hand.

As a result of tests and experiments, the Applicant was able to establish that the above-mentioned problems are essentially the result of the fact that the discharge section of the duct flows into an environment in which humid vapours, i.e. containing more or less fine water particles in suspension, are present.

These humid vapours inevitably, and especially when they are hot vapours, penetrate into the discharge section of the duct and gradually ascend the duct itself, lapping the internal walls of the duct until reaching the product dosing valve, if any.

With each dispensing, the internal walls of the duct progressively retain, firstly, the more volatile parts and, then, also the less volatile ones of the vapours with the consequence that the passage section of the duct is progressively reduced creating resistances to the feeding of the product. The resistances grow with each dispensing to the point in which they constitute a real obstacle to the feeding of the product, the dosage of which therefore varies uncontrollably.

The powderier the product and the more humidity-sensitive its organoleptic qualities, the more serious the problem becomes.

For this reason, known vending machines must undergo periodic check, cleaning and sanitisation interventions. Each intervention entails inevitable costs and continuous machine downtimes and service interruption.

Attempts to close the outlet opening of the duct using external closure plates or plugs have proved ineffective in some cases and insufficiently reliable as well as complicated and expensive in others.

US2017119199 describes a feed device for feeding a granular product, wherein an elastically deformable intermediate section of a feed tube is choked by a thrust head moving orthogonally to the tube between two extreme end positions.

Document GB1012565D2 describes a liquid control valve, which is preferred for application in the field of washing machines or dishwashers for dosing the cleaning liquid by chocking the liquid delivery tube by overturning a part of the same delivery tube arranged upstream of the outlet section.

GB874775A discloses a vending machine for hair cream or like viscous substances having features according to the preamble of claim 1.

EP3068724A2 discloses a soft food and beverage dispenser having features according to the preamble of claim 1.

US3598288A discloses a flexible tube-metering devices having features according to the preamble of claim 1.

WO2019/082116A1 discloses a control device for a fluid supply hose having features according to the preamble of claim 1.

EP2133610A1 discloses a device for choking fluid flow having features according to the preamble of claim 1.

DE19745513A1 discloses a bottle valve system having features according to the preamble of claim 1.

### Subject and Summary of the Invention

Aim of the present invention is to realize a choke device, particularly for an automatic beverage vending machine, which allows the problem exposed above to be solved in a simple, efficient and economical way.

According to the present invention, a choke assembly device is realized as claimed in Claim 1.

The present invention also relates to a feed assembly for feeding a granular or powder product, particularly for an automatic beverage vending machine.

According to the present invention a feed assembly for feeding a granular or powder product as claimed in Claim 9 is realized.

The present invention finally relates to a feed method for feeding a granular or powder product into a container, particularly a container of an automatic beverage vending machine.

According to the present invention, there is provided a feed method for feeding a granular or powder product into a container as claimed in Claim 15.

### Brief Description of the Drawings

Figure 1 is a perspective view, with parts removed for clarity's sake, of an automatic beverage vending machine provided with a choke device and with a feed assembly for feeding a granular or powder product, all realized according to the dictates of the present invention.
Figures 2 and 3 show, in perspective view and on an enlarged scale, the choke device of Figure 1 arranged in two different functional conditions.
Figures 4 and 5 are plan views of the choke device of Figure 2 and, respectively, of Figure 3.
Figure 6 is an enlarged scaled section according to line VI-VI of Figure 4.
Figure 7 is an enlarged scaled section according to line VII-VII of Figure 5.

### Detailed Description of Preferred Embodiments of the Invention

The present invention will now be described in detail with reference to the accompanying figures to allow a skilled person to make and use it. Various modifications of the embodiment described will be immediately clear to the skilled person and the general principles disclosed can be applied to other embodiments and applications without departing from the protection scope of the present invention, as defined in the enclosed drawings. Therefore, the present invention shall not be limited to the shown and described embodiments, but it must be granted the widest protection scope in accordance with the features disclosed and claimed.

Unless otherwise defined, all the herein used technical and scientific terms have the same meaning commonly used by the ordinary skilled in the art of the present invention. In case of conflict, the present invention, including definitions provided, will be binding. Furthermore, the examples are provided for merely illustrative purposes and must not be regarded as limiting.

In order to ease the understanding of the herein described embodiments, reference will be made to some specific embodiments and a specific language will be used to describe them. The terminology used in the present document aims at describing only particular implementations, and is not intended to limit the scope of the present invention.

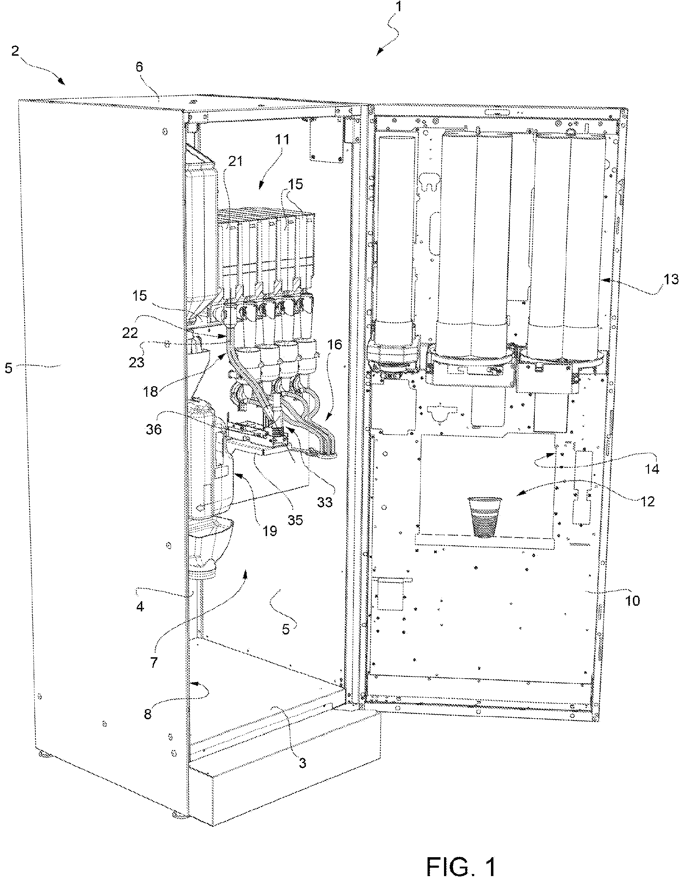

In Figure 1, reference number **1** denotes an automatic beverage vending machine as a whole.

The vending machine **1** comprises an external casing or container **2,** in turn, comprising, a floor support base **3,** a rear wall **4,** two side walls **5** and an upper wall **6** facing the support base **3.**

The support base **3** and the side **5** and upper **6** walls delimit a chamber **7** which is accessed through a front or anterior opening **8** facing the rear wall and closed by a hinged door **10.**

Within the chamber **7,** the container 1 houses a plurality of assemblies **11** for preparing beverages in general and dispensing the same beverages into cups **12** (only one of which is visible in Figure 1) distributed by distributing assemblies **13,** per se known and configured to feed the cups **12** into a compartment **14** outside the door **10.**

Each assembly **11** comprises a relative storage tank **15** for a granular or powder material which is arranged resting on a shelf **15** that is adjacent to the upper wall **6** and ducts **16** for dispensing a beverage or relative product into the cup **12** housed in the compartment **14.**

Again with reference to Figure 1, the vending machine **1** also comprises a feed assembly **18** for feeding a granular or powder product.

In the example described, the assembly **18** is associated with an assembly **19** for the preparation and distribution of espresso coffee, which is also per se known and not described in detail. In this case, the assembly **18** feeds a mass of granular or powder sweetener product, e.g. sugar, directly into the cup **12.**

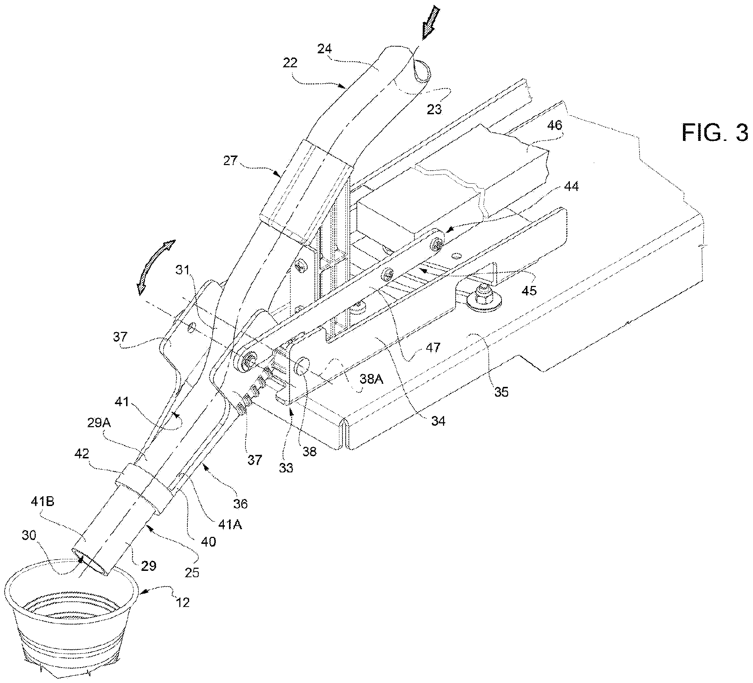

In the example described, the assembly **18** comprises, a sweetener product storage tank **21** which rests on the shelf **15** and a feed duct **22** to guide the product towards the cup **12** along a feed path **23** (Figures 1 and 3).

The duct **23** comprises an inlet section **24** configured, in a per se known manner, to receive the sweetener product from the tank **21** and a discharge section **25** for discharging the product into the cup **12.**

Preferably, the discharge section **25** is connected in a disconnectable manner to the inlet section **24** by means of a releasable joint **27,** which is per se known and, conveniently, of the sliding engagement type.

Preferably, the discharge section **25** is made entirely of elastomeric material and therefore of elastically deformable material and comprises a portion **28** joining the inlet section **24,** a terminal portion **29** delimiting an outlet opening **30** for the sweetener product, and an intermediate portion **31.**

Alternatively, according to a variant not shown, only the intermediate portion **31** is made of elastically deformable material, while the joining portion **28** and the terminal portion **29** may be made of different materials or be substantially rigid tubular portions.

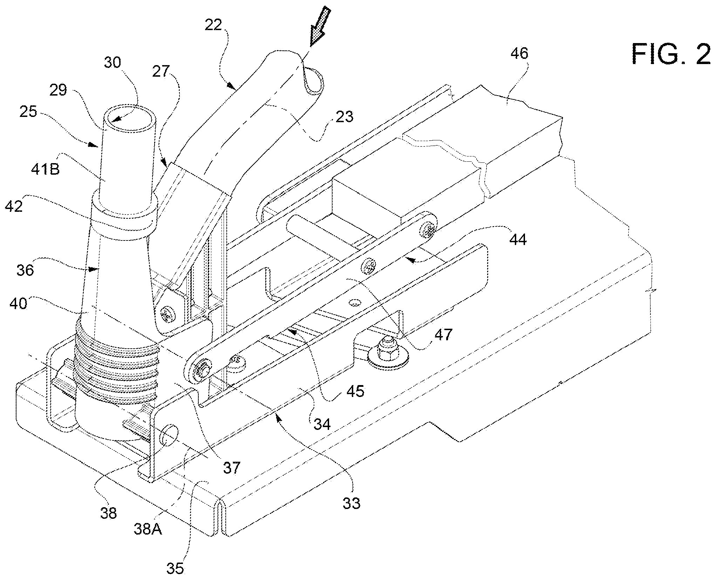

Still with reference to Figure 1 and, in particular, Figures 2 and 3, the assembly **18** further comprises a choke device **33** to elastically deform the intermediate portion **31** and at least partially choke the discharge section **25,** as will be evident from the following.

The choke device **33** comprises its own frame **34,** which is arranged resting on a shelf 35 fixed to the container 2.

Conveniently, the frame **34** is releasably connected to the shelf **35** by means of screws or other releasable attachment devices so that it can be easily removed and replaced by opening the door **10.**

The choke device **33** then comprises a choke member **36,** in turn, comprising a rear attachment portion **37,** which is U-shaped and crossed by the intermediate portion **31.** The rear portion **37** is hinged to the frame **34** by means of a hinge pin **38** arranged orthogonally to the path **23** and below the path **23** itself and the intermediate portion **31.**

The choke member **36** then comprises an anterior support portion **40,** which is shaped to delimit a recess **41,** into which a rear section **29A** of the terminal portion **29** extends. The rear section **29A** perpetually rests on a back wall **41A** of the recess **41** and is retained in the recess **41** by a collar **42.**

An anterior section **41B** of the same terminal portion **29** protrudes, however, in a cantilever fashion beyond the choke member **36.**

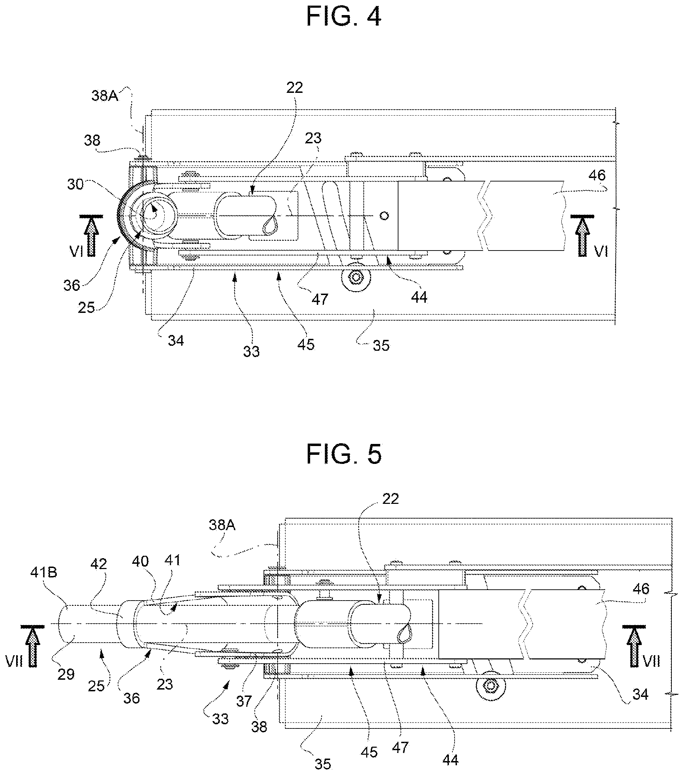

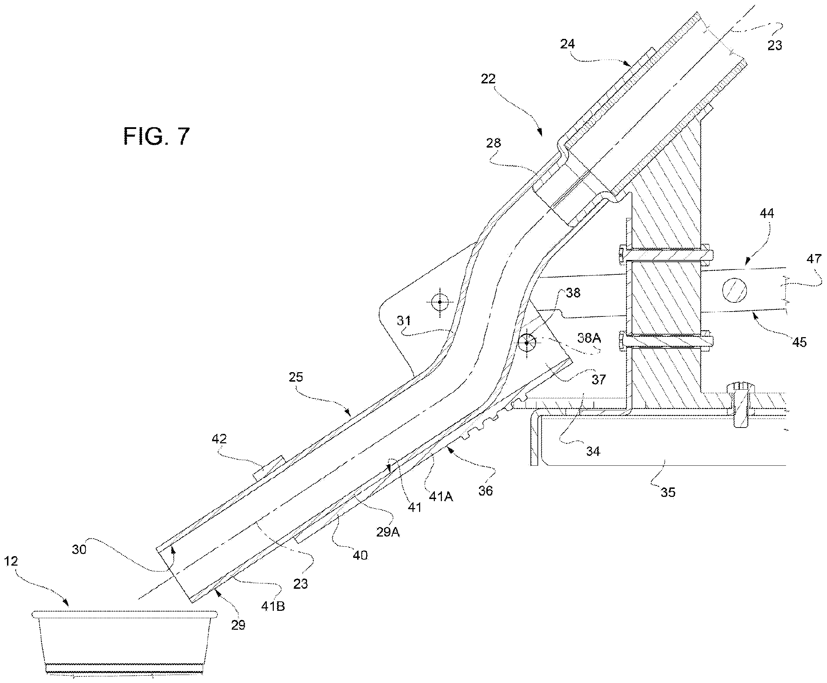

The back wall **41A** extends in a position spaced away from the pin **38** (Figures 5 and 7).

The choke member **36** is rotatable with respect to the frame **34** and about a fixed hinge axis **38A** defined by the pin **38** under the thrust of a motorized actuator device **44,** to rotate between a support position, in which it maintains the terminal portion **29** in a condition of feeding the product into the cup **12,** shown in Figures 3, 5 and 7, and a position that is overturned backwards with respect to the support position, shown in Figures 2, 4 and 6, in which it elastically bends and deforms the intermediate portion **31** and chokes the intermediate portion **31** itself by pushing it into contact with the wall **41A,** effectively fluid-tightly isolating the inlet duct **24** and part of the discharge duct **25** from the outside.

Alternatively, according to a variant not shown, the choke member **36** chokes the intermediate portion **31** without, however, completely occluding the passage so that the inlet section **24** is not mechanically isolated from the outside in a fluid-tight fashion.

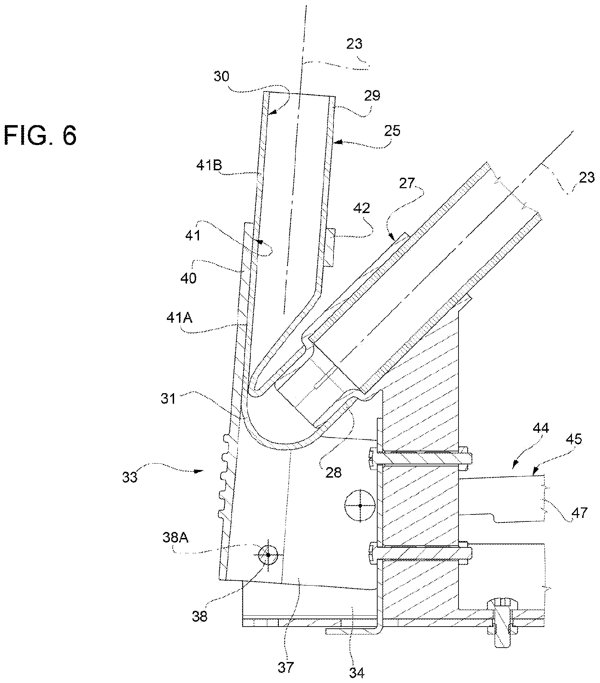

As can be seen from Figures 2 and 4 and, in particular, Figure 6, when the choke member **36** is arranged in its overturned position, the back surface **41A** of the recess **41** extends in a substantially vertical position, the terminal portion **29** extends upwards by arranging its outlet **30** facing upwards in the direction opposite to the cup **12.**

Referring again to Figures 2 and 3, the motorized actuator **44** comprises a connecting rod-crank transmission **45** and an electric motor **46** for operating the connecting rod-crank transmission **45.**

Conveniently, the transmission **45** comprises a connecting rod defined by a fork **47** having arms arranged on opposite parts of the rear attachment portion **37** and pivoted on the rear portion **37,** and a pair of connecting rods defined by parts of the rear portion **37** itself.

From the foregoing, it is evident that the choke device **33** described prevents vapours or sprays of the beverage and, in general, all volatile substances at temperature and not present in the discharge area of the sweetener product, i.e. in or around the compartment **14,** from penetrating into the feed duct **18** through the opening **30** both before and after the dispensing of the product by spraying or simply humidifying the internal surface of the same feed duct.

The foregoing is due to the fact that a portion of the duct **18** close to the outlet is choked and compressed until its passage section is nullified, thereby fluidically isolating the feed duct from the outside.

In addition to this, the backward overturning of the terminal portion **29** results in a distancing of the outlet opening **30** from the dispensing area and the upward orientation of the same outlet opening **30** further hindering and, in practice, preventing the entry into the terminal section **18** of vapours or substances present in the dispensing area.

In this way, the environment inside the duct **18** is kept dry and clean, preventing, on the one hand, parts of the fed product, including the most powdery ones, from adhering to the internal surface of the duct and crystallising, thus creating roughness or obstacles to the free feeding of the product and, on the other hand, variations in the expected chemical, physical and organoleptic characteristics of the same product necessary to perform a predefined sweetening from occurring.

Experimentally, it was then possible to ascertain that the maintenance of a substantially anhydrous condition of the internal volume of the duct **18** is maintained, in some cases, even without completely occluding the intermediate portion, but simply chocking it also being the outlet opening **30** oriented on the other side of the cup **12** and, in general, arranged in an area "away" from the product feeding area when the choke member **36** is arranged in its overturned position. The degree of chocking is variable, for example, depending on the cross-section of the duct, the sensitivity of the product to humidity and the aggressiveness of the humid or contaminated vapours.

From the foregoing, it is also evident that the described feed assembly **18** operates independently of the type and characteristics of the product to be fed.

For this reason, it is evident that the feed assembly **18** described can be associated not only with any beverage preparation assembly provided inside the automatic beverage vending machine 1 but it can be used in all those cases in which, regardless of the container provided to receive it, the product is dispensed in an environment in which vapours or volatile substances are present or sprays can be generated which can enter the duct through the outlet and compromise not only the efficiency and functional reliability of the feed assembly but also modify both the chemical-physical characteristics of the product and its organoleptic qualities.

The fact of providing a releasable joint between the discharge section **25** and the inlet section **24** facilitates and speeds up the maintenance and/or replacement operations of the elastically deformable section, i.e. of that section which, according to the foregoing, is subject to high fatigue cycles and therefore to deterioration and wear, leaving the remaining part of the duct **18** unaltered.

Moreover, the replacement of the discharge section **25** is possible by simply removing the same discharge section **25** from the choke device **36,** therefore without any special technical knowledge and without the use of specific or dedicated tools, the use of which is always undesirable, especially in automatic beverage vending machines where there is very little room for manoeuvre.

Finally, the fact that the feed assembly **18** comprises its own attachment frame **34** and that it can be connected to a fixed support structure by means of simple screws or other equivalent releasable connecting systems, as well as the presence of the joint **27,** allow the entire device **33** to be removed and replaced easily and in a very short time.

From the foregoing, it is also evident that changes and variations can be made to the described assembly **18** without thereby leaving the protective scope defined by the independent claims. In particular, the choke member **36** could be coupled to the frame **34** in a manner other than that described to move along paths other than the one indicated, as well as it could be moved by a drive assembly without mechanical lever transmissions using, for example, an electric linear motor, or transmissions of the nut screw-screw type.

Not only that, but the choke member **36** and/or its attachment to the frame **34** could be modified to bring the intermediate portion **31** as close as possible to the outlet opening **30.**

## Claims

1. A feed assembly (**18**) for feeding a granular or powder product for an automatic beverage vending machine (**1**), the feed assembly (**18**) comprising a feed duct (**22**) for feeding said granular or powder product to guide the product along a feed path (**23**) and towards a product discharge container (**12**), the duct (**22**) having a discharge section (**25**) delimiting a product outlet opening (**30**) towards the container (**12**), the discharge section (**25**) comprising at least one intermediate portion (**31**) made of elastically deformable material and a terminal portion (**29**) delimiting said outlet opening (**30**); the feed assembly (**18**) furthermore comprising a choke device (**33**) configured to receive said discharge section (**25**) and comprising: an attachment frame (**34**) designed to be connected to a fixed support (**35**); and
a choke member (**36**) coupled to said attachment frame (**34**) and having a support surface (**41A**) for said discharge section (**25**);
**characterized in that**, the feed assembly (**18**) comprising motorized means (**44**) for moving said choke member (**36**) with respect to said attachment frame (**34**) between a support position, in which it maintains the discharge section (**25**) in a product feed condition, and an overturned position, in which said support surface (**41A**) extends in a substantially vertical position to elastically deform and at least partially choke said intermediate portion (**31**) and said discharge section (**25**) upstream of said outlet opening (**30**) in the product feed direction along said feed path (**23**), and maintains said outlet opening (**30**) facing upwards;
when the choke member (**36**) is arranged in its overturned position, said terminal portion (**29**) being overturned backwards with respect to the support position and said outlet opening (**30**) facing upwards.

2. The feed assembly (**18**) according to Claim **1**, wherein, when said choke member (**36**) is arranged in its overturned position, said intermediate portion (**31**) is compressed against the support surface (**41A**) and occluded and the discharge section (**25**) is closed in a fluid-tight manner.

3. The feed assembly (**18**) according to Claim **1** or **2**, wherein said choke member (**36**) is rotatable in opposite directions about a hinge axis (**38A**) orthogonal to said feed path (**23**).

4. The feed assembly (**18**) according to Claim **3**, wherein said hinge axis (**38A**) extends below said feed path (**23**).

5. The feed assembly (**18**) according to any one of the Claims from **1** to **4,** wherein said duct (**22**) comprises a product inlet section (**24**), and wherein a releasable connection joint (**27**) is interposed between said inlet section (**24**) and said discharge section (**25**).

6. The feed assembly (**18**) according to Claim **1**, furthermore comprising hinge means (**37**, **38**) interposed between said choke member (**36**) and said frame (**34**) to allow the choke member (**36**) to rotate around at least one hinge axis (**38A**).

7. The feed assembly (**18**) according to Claim **6**, wherein said hinge axis (**38A**) is an axis fixed with respect to said frame (**34**).

8. The feed assembly (**18**) according to Claim **6** or **7**, wherein said hinge axis (**38A**) extends below said intermediate portion (**31**).

9. The feed assembly (**18**) according to Claim **1**, wherein said choke member (**36**) is hinged to said frame (**34**) by means of a single fixed hinge pin (**38**) and protrudes in a cantilever fashion from the frame (**34**).

10. The feed assembly according to Claim 1, wherein said choke member (**36**) comprises a recessed portion (**41**) at least partially housing a terminal portion (**29**) of said discharge section (**25**) and retention means (**42**) for retaining said terminal portion (**29**) in said recessed portion (**41**); a back wall (**41A**) of said recessed portion defining said support surface.

11. The feed assembly according to Claim 1, wherein said motorized means (**44**) comprise a connecting rod-crank transmission (**45**) and an electric actuator (**46**) for operating said connecting rod-crank device (**45**).

12. The feed assembly according to Claim **11**, wherein said connecting rod-crank transmission (**45**) comprises a connecting rod defined by a fork having arms arranged on opposite sides of said choke member (**36**).

13. An automatic beverage vending machine (**1**) comprising a storage tank (**21**) for a granular or powder product and the feed assembly (**18**) according to any one of the Claims **1** to **12**; wherein the inlet section (**24**) is configured to receive the product from said storage tank (**21**) and convey it into said discharge section (**25**).

14. A feed method for feeding a granular or powder product into a container (**12**), the container (**12**) being a cup in the automatic beverage vending machine (**1**) as claimed in claim 13; the method comprises the step of feeding the product towards the container (**12**) using the feed duct (**22**) having the inlet section (**24**) configured to receive the granular or powder product and the discharge section (**25**) having the terminal portion (**29**) delimiting the product outlet opening (**30**), the step of forming the discharge section (**25**) providing at least one said intermediate portion (**31**) of said discharge section (**25**) made of elastically deformable material, the step of elastically deforming the intermediate portion (**31**) thus choking at least partially the discharge section (**25**) upstream of said outlet opening (**30**) in a product feed direction after a dosed product mass has been fed into said container (**12**) and wherein the deformation and the choking of said intermediate portion (**31**) is carried out by overturning backwards the terminal portion (**29**) of said discharge section (**25**) until said outlet opening (**30**) is facing upwards.

15. The method according to Claim **14**, wherein the deformation and the choking of said intermediate portion (**31**) is carried out so as to compress said intermediate portion (**31**) and close in a fluid-tight manner the part of said duct (**22**) arranged upstream of said intermediate portion (**31**).

## Patentansprüche

1. Zuführungsbaugruppe (**18**) zum Zuführen eines körnigen oder pulverförmigen Produkts zu einem Getränkeautomaten (**1**), die Zuführungsbaugruppe (**18**) umfassend einen Zuführungskanal (**22**) zum Zuführen des körnigen oder pulverförmigen Produkts, um das Produkt entlang eines Zuführungswegs (**23**) und zu einem Produktausbringungsbehälter (**12**) hin zu leiten, wobei der Kanal (**22**) einen Ausbringungsbereich (**25**) aufweist, der eine Produktauslassöffnung (**30**) zu dem Behälter (**12**) hin begrenzt, der Ausbringungsbereich (**25**) umfassend mindestens einen Zwischenabschnitt (**31**), der aus elastisch verformbarem Material hergestellt ist, und einen Anschlussabschnitt (**29**), der die Auslassöffnung (**30**) begrenzt; die Zuführungsbaugruppe (**18**) ferner umfassend eine Drosselvorrichtung (**33**), die konfiguriert ist, um den Ausbringungsbereich (**25**) aufzunehmen, und umfassend: einen Befestigungsrahmen (**34**), der dafür vorgesehen ist, mit einem festen Träger (**35**) verbunden zu werden; und ein Drosselelement (**36**), das gekoppelt mit dem Befestigungsrahmen (**34**) gekoppelt ist, und das einer Tragoberfläche (**41A**) für den Ausbringungsbereich (**25**) aufweist;
**dadurch gekennzeichnet, dass**, die Zuführungsbaugruppe (**18**) motorisierte Mittel (**44**) zum Bewegen des Drosselelements (**36**) in Bezug auf den Befestigungsrahmen (**34**) zwischen einer Tragposition, in der es den Ausbringungsbereich (**25**) in einem Produktzuführungszustand hält, und einer umgedrehten Position umfasst, in der sich die Tragoberfläche (**41A**) in einer im Wesentlichen vertikalen Position erstreckt, um sich elastisch zu verformen, und den Zwischenabschnitt (**31**) und den Ausbringungsbereich (**25**) stromaufwärts von der Auslassöffnung (**30**) in der Produktzuführungsrichtung entlang des Zuführungswegs (**23**) mindestens teilweise zu drosseln, und die Auslassöffnung (**30**) nach oben gerichtet hält;
wenn das Drosselelement (**36**) in seiner umgedrehten Position angeordnet ist, wobei der Anschlussabschnitt (**29**) in Bezug auf die Tragposition nach hinten umgedreht ist und die Auslassöffnung (**30**) nach oben gerichtet ist.

2. Zuführungsbaugruppe (**18**) nach Anspruch **1**, wobei, wenn das Drosselelement (**36**) in seiner umgedrehten Position angeordnet ist, der Zwischenabschnitt (**31**) gegen die Tragoberfläche (**41A**) zusammengedrückt und verstopft wird, und wobei der Ausbringungsbereich (**25**) flüssigkeitsdicht verschlossen ist.

3. Zuführungsbaugruppe (**18**) nach Anspruch **1** oder **2**, wobei das Drosselelement (**36**) in entgegengesetzte Richtungen um eine Scharnierachse drehbar (**38A**) orthogonal zu dem Zuführungsweg (**23**) drehbar ist.

4. Zuführungsbaugruppe (**18**) nach Anspruch 3, wobei sich die Scharnierachse (**38A**) unterhalb des Zuführungswegs (**23**) erstreckt.

5. Zuführungsbaugruppe (**18**) nach einem der Ansprüche aus **1** bis **4**, wobei der Kanal (**22**) einen Produkteinlassbereich (**24**) umfasst, und wobei ein lösbares Verbindungsstück (**27**) zwischen dem Einlassabschnitt (**24**) und dem Ausbringungsbereich (**25**) eingefügt ist.

6. Zuführungsbaugruppe (**18**) nach Anspruch **1**, ferner umfassend Scharniermittel (**37**, **38**) die zwischen dem Drosselelement (**36**) und dem Rahmen (**34**) eingefügt sind, um es dem Drosselelement (**36**) zu ermöglichen, sich um mindestens eine Scharnierachse (**38A**) zu drehen.

7. Zuführungsbaugruppe (**18**) nach Anspruch **6**, wobei die Scharnierachse (**38A**) eine feste Achse in Bezug auf den Rahmen (**34**) ist.

8. Zuführungsbaugruppe (**18**) nach Anspruch **6** oder **7**, wobei sich die Scharnierachse (**38A**) unterhalb des Zwischenabschnitts (**31**) erstreckt.

9. Zuführungsbaugruppe (**18**) nach Anspruch **1**, wobei das Drosselelement (**36**) an dem Rahmen (**34**) mittels eines einzigen festen Scharnierstiftes (**38**) gelenkig angebracht ist und auf freitragende Weise aus dem Rahmen (**34**) vorsteht.

10. Zuführungsbaugruppe nach Anspruch **1**, wobei das Drosselelement (**36**) einen vertieften Abschnitt (**41**) umfasst, der mindestens teilweise einen Anschlussabschnitt (**29**) des Ausbringungsbereichs (**25**) und Rückhaltemittel (**42**) zum Rückhalten des Anschlussabschnitts (**29**) in dem vertieften Abschnitt (**41**) unterbringt; eine Rückwand (**41A**) des vertieften Abschnitts, die die Tragoberfläche definiert.

11. Zuführungsbaugruppe nach Anspruch **1**, wobei die motorisierten Mittel (**44**) ein Stangenkurbelgetriebe (**45**) und einen elektrischen Aktuator (**46**) zum Betätigen der Stangenkurbelvorrichtung (**45**) umfassen.

12. Zuführungsbaugruppe nach Anspruch **11**, wobei das Stangenkurbelgetriebe (**45**) eine Verbindungsstange, die durch eine Gabel definiert ist, die Arme auf gegenüberliegenden Seiten des Drosselelements (**36**) aufweist, umfasst.

13. Getränkeautomat (**1**) umfassend einen Vorratstank (**21**) für ein körniges oder pulverförmiges Produkt und die Zuführungsbaugruppe (**18**) nach einem der Ansprüche **1** bis **12**; wobei der Einlassabschnitt (**24**) konfiguriert ist, um das Produkt aus dem Vorratstank (**21**) aufzunehmen und es in den Ausbringungsbereich (**25**) zu befördern.

14. Zuführungsverfahren zum Zuführen eines körnigen oder pulverförmigen Produkts in einen Behälter (**12**), wobei der Behälter (**12**) ein Becher in dem Getränkeautomaten (**1**) nach Anspruch 13 ist; wobei das Verfahren den Schritt des Zuführens des Produkts zu dem Behälter (**12**) unter Verwendung des Zuführungskanals (**22**), der den Einlassbereich (**24**) aufweist, der konfiguriert ist, um, das körnige oder pulverförmige Produkt aufzunehmen, und den Ausbringungsbereich (**25**), der den Anschlussabschnitt (**29**) aufweist, der die Produktauslassöffnung begrenzt (**30**), umfasst, wobei der Schritt des Ausbildens des Ausbringungsbereichs (**25**) mindestens den einen Zwischenabschnitt (**31**) des Ausbringungsbereichs (**25**), der aus elastisch verformbarem Material hergestellt ist, bereitstellt, wobei der Schritt des elastischen Verformens des Zwischenabschnitts (**31**), wodurch der Ausbringungsbereich (**25**) stromaufwärts von der Auslassöffnung (**30**) in einer Produktzuführungsrichtung mindestens teilweise gedrosselt wird, nachdem eine dosierte Produktmasse in den Behälter zugeführt wurde (**12**) und wobei die Verformung und das Drosseln des Zwischenabschnitts (**31**) durch nach hinten Umdrehen des Endabschnitts (**29**) des Ausbringungsbereichs (**25**) bis die Auslassöffnung (**30**) nach oben gerichtet ist, ausgeführt wird.

15. Verfahren nach Anspruch **14**, wobei die Verformung und das Drosseln des Zwischenabschnitts (**31**) ausgeführt wird, sodass der Zwischenabschnitt (**31**) zusammengedrückt und der Teil des Kanals (**22**), der stromaufwärts von dem Zwischenabschnitt (**31**) angeordnet ist, auf flüssigkeitsdichte Art verschlossen wird.

## Revendications

1. Ensemble d'acheminement (**18**) destiné à acheminer un produit granulaire ou pulvérulent pour un distributeur automatique de boissons (**1**), l'ensemble d'acheminement (**18**) comprenant un conduit d'acheminement (**22**) pour acheminer ledit produit granulaire ou pulvérulent afin de guider le produit le long d'un chemin d'acheminement (**23**) et vers un récipient de décharge de produit (**12**), le conduit (**22**) ayant une section de décharge (**25**) délimitant une ouverture de sortie de produit (**30**) vers le récipient (**12**), la section de décharge (**25**) comprenant au moins une partie intermédiaire (**31**) constituée d'un matériau élastiquement déformable et d'une partie terminale (**29**) délimitant ladite ouverture de sortie (**30**) ; l'ensemble d'acheminement (**18**) comprenant en outre un dispositif d'étranglement (**33**) conçu pour recevoir ladite section de décharge (**25**) et comprenant : un cadre de fixation (**34**) créé pour être relié à un support fixe (**35**) ; et un élément d'étranglement (**36**) accouplé audit cadre de fixation (**34**) et ayant une surface de support (**41A**) pour ladite section de décharge (**25**) ;
**caractérisé en ce que,** l'ensemble d'acheminement (**18**) comprenant un moyen motorisé (**44**) destiné à déplacer ledit élément d'étranglement (**36**) par rapport audit cadre de fixation (**34**) entre une position de support, dans laquelle il maintient la section de décharge (**25**) dans une condition d'acheminement de produit, et une position de renversement, dans laquelle ladite surface de support (**41A**) s'étend dans une position sensiblement verticale pour déformer élastiquement et étrangler au moins partiellement ladite partie intermédiaire (**31**) et ladite section de décharge (**25**) en amont de ladite ouverture de sortie (**30**) dans la direction d'acheminement de produit le long dudit chemin d'acheminement (**23**), et maintient ladite ouverture de sortie (**30**) orientée vers le haut ;
lorsque l'élément d'étranglement (**36**) est disposé dans sa position renversée, ladite partie terminale (**29**) étant renversée vers l'arrière par rapport à la position de support et ladite ouverture de sortie (**30**) étant orientée vers le haut.

2. Ensemble d'acheminement (**18**) selon la revendication **1**, dans lequel, lorsque ledit élément d'étranglement (**36**) est disposé dans sa position renversée, ladite partie intermédiaire (**31**) est comprimée contre la surface de support (**41A**) et occluse et la section de décharge (**25**) est fermée de manière étanche au fluide.

3. Ensemble d'acheminement (**18**) selon la revendication **1** ou **2**, dans lequel ledit élément d'étranglement (**36**) peut tourner dans des directions opposées autour d'un axe d'articulation (**38A**) orthogonal audit chemin d'acheminement (**23**).

4. Ensemble d'acheminement (**18**) selon la revendication **3**, dans lequel ledit axe d'articulation (**38A**) s'étend sous ledit chemin d'acheminement (**23**).

5. Ensemble d'acheminement (**18**) selon l'une quelconque des revendications **1** à **4**, dans lequel ledit conduit (**22**) comprend une section d'entrée de produit (**24**), et dans lequel un joint de liaison amovible (**27**) est interposé entre ladite section d'entrée (**24**) et ladite section de décharge (**25**).

6. Ensemble d'acheminement (**18**) selon la revendication **1**, comprenant en outre un moyen d'articulation (**37**, **38**) interposé entre ledit élément d'étranglement (**36**) et ledit cadre (**34**) pour permettre à l'élément d'étranglement (**36**) de tourner autour d'au moins un axe d'articulation (**38A**).

7. Ensemble d'acheminement (**18**) selon la revendication **6**, dans lequel ledit axe d'articulation (**38A**) est un axe fixe par rapport audit cadre (**34**).

8. Ensemble d'acheminement (**18**) selon la revendication **6** ou **7**, dans lequel ledit axe d'articulation (**38A**) s'étend sous ladite partie intermédiaire (**31**).

9. Ensemble d'acheminement (**18**) selon la revendication **1**, dans lequel ledit élément d'étranglement (**36**) est articulé sur ledit cadre (**34**) au moyen d'un seul axe d'articulation fixe (**38**) et fait saillie en porte-à-faux par rapport au cadre (**34**).

10. Ensemble d'acheminement selon la revendication **1**, dans lequel ledit élément d'étranglement (**36**) comprend une partie en retrait (**41**) abritant au moins partiellement une partie terminale (**29**) de ladite section de décharge (**25**) et un moyen de rétention (**42**) pour retenir ladite partie terminale (**29**) dans ladite partie en retrait (**41**) ; une paroi arrière (**41A**) de ladite partie en retrait définissant ladite surface de support.

11. Ensemble d'acheminement selon la revendication **1**, dans lequel ledit moyen motorisé (**44**) comprend une transmission bielle-manivelle (**45**) et un actionneur électrique (**46**) pour faire fonctionner ledit dispositif bielle-manivelle (**45**).

12. Ensemble d'acheminement selon la revendication **11**, dans lequel ladite transmission bielle-manivelle (**45**) comprend une bielle définie par une fourche ayant des bras disposés sur des côtés opposés dudit élément d'étranglement (**36**).

13. Distributeur automatique de boissons (**1**) comprenant un réservoir de stockage (**21**) pour un produit granulaire ou pulvérulent et l'ensemble d'acheminement (**18**) selon l'une quelconque des revendications **1** à **12** ; dans lequel la section d'entrée (**24**) est conçue pour recevoir le produit à partir dudit réservoir de stockage (**21**) et le transporter dans ladite section de décharge (**25**).

14. Procédé d'acheminement destiné à acheminer un produit granulaire ou pulvérulent dans un récipient (**12**), le récipient (**12**) étant un gobelet dans le distributeur automatique de boissons (**1**) selon la revendication 13 ; le procédé comprend l'étape consistant à acheminer le produit vers le récipient (**12**) à l'aide du conduit d'acheminement (**22**) ayant la section d'entrée (**24**) conçue pour recevoir le produit granulaire ou pulvérulent et la section de décharge (**25**) ayant la partie terminale (**29**) délimitant l'ouverture de sortie de produit (**30**), l'étape consistant à former la section de décharge (**25**) prévoyant au moins une dite partie intermédiaire (**31**) de ladite section de décharge (**25**) constituée d'un matériau élastiquement déformable, l'étape consistant à déformer élastiquement la partie intermédiaire (**31**) étranglant ainsi au moins partiellement la section de décharge (**25**) en amont de ladite ouverture de sortie (**30**) dans une direction d'acheminement de produit après l'acheminement d'une masse de produit dosée dans ledit récipient (**12**) et dans lequel la déformation et l'étranglement de ladite partie intermédiaire (**31**) sont effectués en renversant vers l'arrière la partie terminale (**29**) de ladite section de décharge (**25**) jusqu'à ce que ladite ouverture de sortie (**30**) soit orientée vers le haut.

15. Procédé selon la revendication **14**, dans lequel la déformation et l'étranglement de ladite partie intermédiaire (**31**) sont effectués de manière à comprimer ladite partie intermédiaire (**31**) et à fermer de manière étanche au fluide la partie dudit conduit (**22**) disposée en amont de ladite partie intermédiaire (**31**).
